# EUROPEAN PATENT APPLICATION

(11) **EP 1 180 736 A1**
(43) Date of publication of application: **20.02.2002**
(21) Application number: 01119837.1
(22) Date of filing: 16.08.2001
(51) Int. Cl.: G05G 5/03, B60R 16/00

(54) **Vehicle-mounted input unit for centralized operation of various vehicle-mounted electronic devices with single manual manipulator with force feedback**

(30) Priority: 18.08.2000 JP 2000248781
(71) Applicant: ALPS ELECTRIC CO., LTD., Tokyo 145-8501 (JP)
(72) Inventor: Masudaya, Hideki, c/o Alps Electric Co.,Ltd., Tokyo 145-8501 (JP)
(74) Representative: Klunker . Schmitt-Nilson . Hirsch

(57) **Abstract**

A vehicle-mounted input unit capable of enabling the manual manipulator to give its operator a feel of resistance varying with what is done by operating the manipulator and thereby affording excellent operating convenience is to be provided. In a memory unit provided in a control section are stored tables showing correlations between the operating directions and quantity of a manual manipulator and an external force applied to the manual manipulator from actuators. The control section determines the direction and magnitude of the external force to be applied to the manual manipulator from positional information supplied from position sensors and the tables and drives the actuators via an actuator driver. The external force to be applied to the manual manipulator can be regulated either according to the movable range of a vehicle-mounted electric device from its current position to an end of its possible motion or according to the magnitude of the working force applied to the manual manipulator.

## Description

### BACKGROUND OF THE INVENTION

### 1. Field of the Invention

The present invention relates to a vehicle-mounted input unit for centralized operation of various vehicle-mounted electronic devices with a single manual manipulator, and more particularly to a means for improving the operating ease of a manual manipulator.

### 2. Description of the Prior Art

Today's automobile is typically equipped with various electronic devices including an air conditioner, a radio, a television, a CD player and a navigation system. Separate operation of so many devices with individually provided manipulating means might impede proper control of the vehicle itself. In view of this risk, proposals have been made according to the prior art of a vehicle-mounted input unit permitting the operation of a variety of electronic devices in different ways with a single manual manipulator, so that any of these electronic devices can be turned on or off or switched over from one function to another without obstructing safe driving.

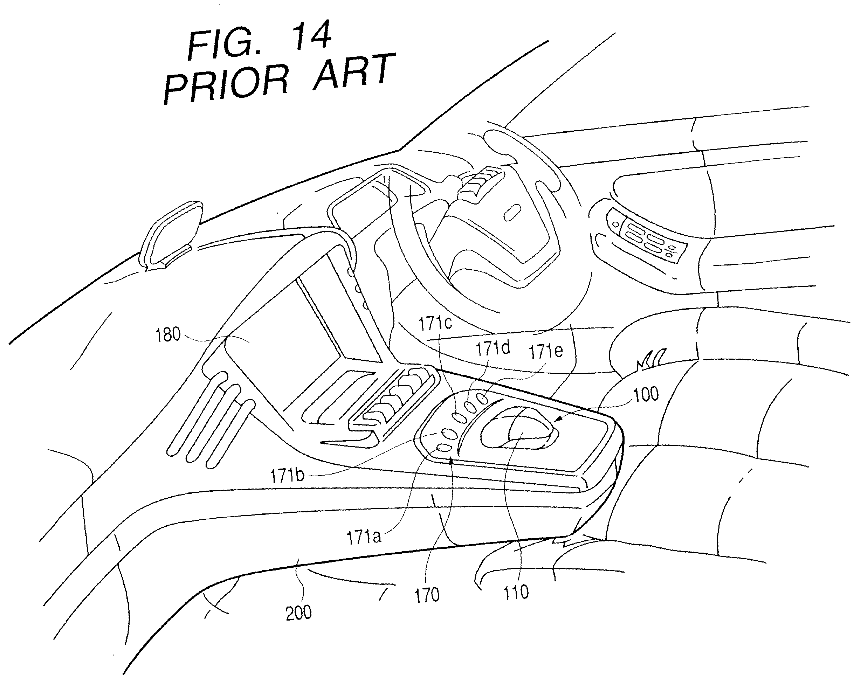

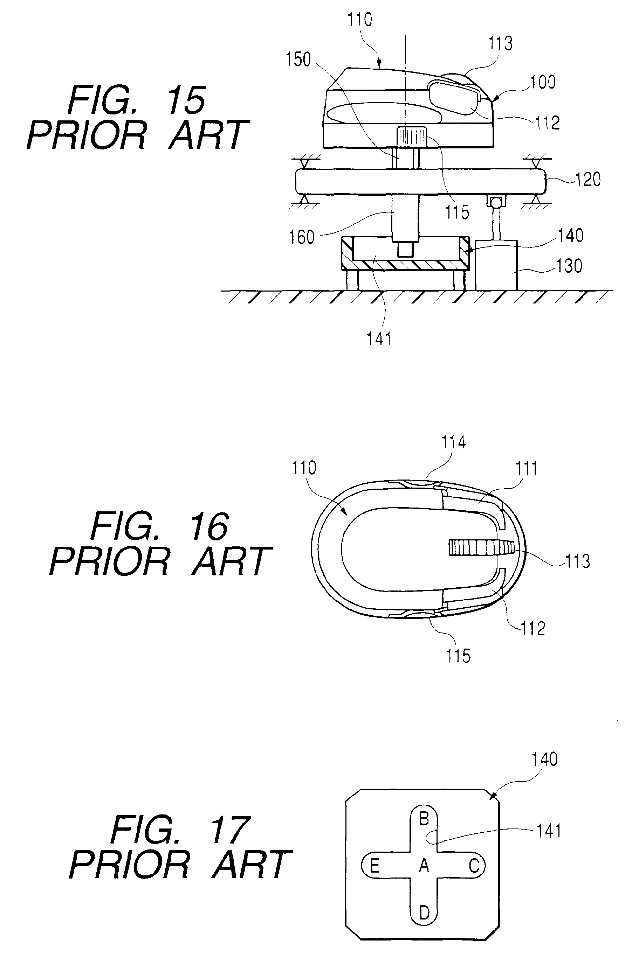

Such a vehicle-mounted input unit according to the prior art will be described below with reference to Fig. 14 through Fig. 17. Fig. 14 shows an interior view of an automobile in which a vehicle-mounted input unit is installed; Fig. 15, a profile of a vehicle-mounted input unit proposed according to the prior art; Fig. 16, a plan of a manual manipulator of the vehicle-mounted input unit shown in Fig. 15; and Fig. 17, a plan of a guide plate of the vehicle-mounted input unit shown in Fig. 15.

As illustrated in Fig. 14, a vehicle-mounted input unit 100 in this example is installed in a console box 200 provided between the driver's seat and the front passenger seat of an automobile. Referring to Fig. 15, the vehicle-mounted input unit 100 according to the prior art is mainly configured of a manual manipulator 110 provided with two clicking switches 111 and 112 as signal input means and three rotary variable resistors 113, 114 and 115 (see Fig. 16) ; an XY table 120 driven by the manual manipulator 110 in two mutually orthogonal directions (the direction orthogonal to the surface of Fig. 15 and the lateral direction in the drawing) ; a stick controller 130 as a position signal input means for entering signals into an external device corresponding to the operating direction and the operating quantity of this XY table 120; and a guide plate 140 engaged with an engaging pin 160 protruding from the under face of the XY table 120 (see Fig. 17).

The manual manipulator 110 and the XY table 120 are integrated via a connecting shaft 150, and the XY table 120 and the guide plate 140 are engaged with each other by movably inserting the tip of the engaging pin 160 into a guide groove 141 of the guide plate 140. This guide groove 141 can be set in any desired shape that permits the tip of the engaging pin 160 to move in a specific direction. For instance, as shown in Fig. 17, a guide groove 141 having a cross planar shape can be cut into the upper face of the guide plate 140 to allow the tip of the engaging pin 160 to move from a center A to ends B, C, D and E in two mutually orthogonal directions. Thus by operating the manual manipulator 110, the engaging pin 160 can be moved along the guide groove 141 of the guide plate 140 via the XY table 120 and, in a state in which the tip of this engaging pin 160 is positioned in one of the points A, B, C, D and E in the guide groove 141, information regarding that engaging position (position signal) can be supplied from the stick controller 130. Therefore, by utilizing such a position signal, a desired function to be performed by one of the vehicle-mounted electronic devices (the function to be regulated) can be alternatively selected. Once the desired function of an electronic device is selected in this way, the selected function can be regulated and/or switched by appropriately operating the three rotary variable resistors 113 through 115 provided on the manual manipulator 110.

The vehicle-mounted input unit 100 configured in this way, as illustrated in Fig. 14, combined with a switching unit 170 for alternatively selecting a desired one out of a plurality of electronic devices mounted on a vehicle, a display unit 180 for displaying the name of the electronic device selected by this switching unit 170 and the operation done by the vehicle-mounted input unit 100, and a control section (not shown) for controlling these units, can operate the plurality of electronic devices in a centralized manner. The operating switches 171a through 171e of the switching unit 170, installed in the console box 200, are arranged in the vicinity of the vehicle-mounted input unit 100, and are individually connected to different electronic devices. If, for instance, the operating switches 171a through 171e are individually connected to an air conditioner, a radio, a television, a CD player and a navigation system mounted on the vehicle, the air conditioner can be turned on or off or an air conditioner mode can be indicated to the vehicle-mounted input unit 100 by manipulating the operating switch 171a; by manipulating the operating switch 171b, the radio can be turned on or off or a radio operating mode can be indicated to the vehicle-mounted input unit 100; and by operating one of the operating keys 171c through 171e, the respectively matching electronic devices can be turned on or off or their respective operating modes can be indicated to the vehicle-mounted input unit 100. The display unit 180, that may be a liquid crystal display unit, is installed in a position readily visible by the driver, and the control section is installed in the console box 200.

Whereas the selection and/or regulation of the function of the electronic device selected by the switching unit 170 can be accomplished by operating the vehicle-mounted input unit 100, the function selectable and/or regulable by operating the vehicle-mounted input unit 100 differs with the type of the electronic device selected. For instance, when the air conditioner mode is indicated by manipulating the switching unit 170, if the manual manipulator 110 is operated to position the engaging pin 160 in the guide groove 141 of the guide plate 140 at its end B and the clicking switch 111 is pressed, the function of "air flow rate regulation" will be selected. Or if the engaging pin 160 is positioned in the guide groove 141 at its end C and the clicking switch 111 is clicked, the function of "air flow positional regulation" will be selected. Similarly, if the engaging pin 160 is positioned in the guide groove 141 at its ends D and E and the clicking switch 111 is clicked, the functions of "air flow directional regulation" and "temperature control" will be selected, respectively.

By appropriately operating the rotary variable resistors 113 through 115 after selecting one of these functions, that function can be regulated. When, for instance, the air conditioner mode is indicated by the switching unit 170, if the function of "air flow rate regulation" is selected by the manual manipulator 110, it will become possible to regulate the rate of air flow from the air conditioner by manipulating the rotary variable resistor 113. Similarly, if the "air flow positional regulation" is selected in the air conditioner mode, the air flow position of the air conditioner can be regulated by manipulating the rotary variable resistors 114 and 115. Or when the radio mode is indicated by the switching unit 170, if "volume control" is selected by the manual manipulator 110, the sound volume of the radio can be regulated by manipulating the rotary variable resistors 113 or, similarly, if "tuning" is selected in the radio mode, the radio can be tuned by manipulating the rotary variable resistors 114 and 115.

In the vehicle-mounted input unit 100 according to the prior art, the operating direction and the operating range of the manual manipulator 110 is regulated by inserting the tip of the engaging pin 160 integrated with the manual manipulator 110 via the connecting shaft 150 and the XY table 120 into the guide groove 141 of the guide plate 140, the hitting of the tip of the engaging pin 160 against an end of the guide groove 141 makes it known to the operator that the manual manipulator 110 has reached a limit of its manipulation.

However, where such a configuration is used, if an excessively strong force is applied to the manual manipulator 110, the engaging pin 160 will strike against an end of the guide groove 141 to subject the manual manipulator 110 to a heavy impact. This might not only make the operator feel unpleasant but also make impossible for the function regulating speed of the vehicle-mounted electric device to be appropriately controlled by regulating the quantity of the manipulation of the manual manipulator 110. Thus, in the configuration of the vehicle-mounted input unit 100 according to the prior art, the functional regulation of the selected vehicle-mounted electric device is accomplished by manipulating the rotary variable resistors 113 through 115 provided on the manual manipulator 110, but not by the manual manipulator 110 itself with the obvious result that the function regulating speed of the vehicle-mounted electric device cannot be appropriately controlled by regulating the quantity of the manipulation of the manual manipulator 110. Therefore, it is necessary to alternately use the manual manipulator 110 and the rotary variable resistors 113 through 115, making it impossible to quickly regulate the function of any selected vehicle-mounted electric device.

There is a further problem that, in the vehicle-mounted input unit 100 according to the prior art, as the manual manipulator 110 can regulate a vehicle-mounted electric device, irrespective of the range between the current position of the device and an end of its absolute movable range, within the movable range of the manual manipulator 110 which is limited by the guide groove 141, the operator cannot know how farther the vehicle-mounted electric device can be moved, and accordingly is unable to functionally regulate the vehicle-mounted electric device appropriately in its remaining movable range. When, for instance, the driver tries to change the height of the steering wheel by operating the manual manipulator 110, if there is a wide remaining movable range from the current set height of the steering wheel in the direction of the desired change, it will be preferable to operate the manual manipulator 110 in a large quantity to quickly achieve the desired height of the steering wheel. Or if the remaining movable range is narrow, it will be preferable to operate the manual manipulator 110 in a small quantity to prevent the wheel from striking against the end of its movable range in that direction. However, the vehicle-mounted input unit 100 according to the prior art does not allow the driver to know the remaining movable range of the wheel, and accordingly to accomplish the change in such a preferable way.

The vehicle-mounted input unit 100 according to the prior art involves still another problem that, as the resistance the operator feels from the manual manipulator 110 is constant irrespective of the working force applied to it, its operating convenience is difficult to satisfy every operator.

### SUMMARY OF THE INVENTION

An object of the present invention, attempted to obviate these shortcomings of the prior art, is to provide a vehicle-mounted input unit capable of enabling the manual manipulator to give its operator a feel of resistance varying with what is done by operating the manipulator and thereby affording excellent operating convenience.

In order to solve the above-noted problems, firstly, the invention provides a vehicle-mounted input unit in which a manual manipulator, at least one position sensor for supplying position signals corresponding to the direction and quantity in which the manual manipulator is driven, at least one actuator for providing an external force to the manual manipulator, and a control section for controlling the actuators are provided, wherein the control section computes the movable range of the manual manipulator from its current position to an end of its possible motion according to changes in position signals supplied from the position sensor, and controls the output to the actuator according to the computed width of the movable range.

As this configuration enables the manual manipulator to give its operator a feel of resistance varying with the movable range of the manipulator, the feel can be weakened when the movable range of the manual manipulator from its current position to an end of its possible motion is wide or, conversely, it can be emphasized when the movable range is narrow. Accordingly, both high speed regulation and fine regulation of vehicle-mounted electric devices to be operated by the manual manipulator are made available at the same time, making it possible to correspondingly increase the operating convenience of the manual manipulator.

In order to solve the above-noted problems, secondly, the invention provides a vehicle-mounted input unit in which a manual manipulator, at least one position sensor for supplying position signals corresponding to the direction and quantity in which the manual manipulator is operated, at least one actuator for providing an external force to the manual manipulator, and a control section for controlling the actuator are provided, wherein the control section computes the magnitude of the working force applied to the manual manipulator according to changes in position signals supplied from the position sensor, and controls the output to the actuator according to the computed working force.

As this configuration enables the manual manipulator to give its operator a feel of resistance varying with the working force applied thereto, when for instance a powerful operator forcefully operates the manual manipulator, the feel can be strengthened or, conversely, when a relatively powerless operator operates the manual manipulator with a relatively small force, it can be weakened to enable the operator, irrespective of his or her relative power, to feel satisfactory operating convenience. Incidentally, the working force applied to the manual manipulator can be computed by differentiating twice a change in the position signals supplied from the position sensors to figure out the operating acceleration of the manual manipulator, and applying the second law of motion (F = m·a, wherein F is the working force applied to the manual manipulator, m is the mass of the manual manipulator and the operator's fingers, and a is the operating acceleration of the manual manipulator) to the acceleration thereby obtained.

In order to solve the above-noted problems, thirdly, the invention provides a vehicle-mounted input unit in which a manual manipulator, at least one position sensor for supplying position signals corresponding to the direction and quantity in which the manual manipulator is driven, at least one actuator for providing an external force to the manual manipulator, and a control section for controlling the actuator are provided, wherein the control section computes the operating speed of the manual manipulator according to changes in position signals supplied from the position sensor, and controls the output to the actuator according to the computed level of the operating speed.

As this configuration enables the manual manipulator to give its operator a feel of resistance varying with the operating speed of the manual manipulator, it can keep the operating speed of the manual manipulator either constant or variable from one operator to another and thereby enable the operator to feel that he or she is operating the manipulator appropriately, resulting in improved operating convenience of the vehicle-mounted input unit.

In order to solve the above-noted problems, fourthly, the inventior provides a vehicle-mounted input unit in which a manual manipulator, at least one position sensor for supplying position signals corresponding to the direction and quantity in which the manual manipulator is driven, at least one actuator for providing an external force to the manual manipulator, and a control section for controlling the actuator are provided, wherein the control section computes the operating acceleration of the manual manipulator according to changes in position signals supplied from the position sensor, and controls the output to the actuator according to the computed level of the operating acceleration.

As this configuration enables the manual manipulator to give its operator a feel of resistance varying with the operating acceleration of the manual manipulator, it can keep the operating acceleration of the manual manipulator either constant or variable from one operator to another and thereby enable the operator to feel that he or she is operating the manipulator appropriately, resulting in improved operating convenience of the vehicle-mounted input unit.

In order to solve the above-noted problems, fifthly, the invention provides a vehicle-mounted input unit in which a manual manipulator, at least one vehicle-mounted electric device operated by the manual manipulator, at least one position sensor for supplying position signals corresponding to the direction and quantity in which the vehicle-mounted electric device is driven, at least one actuator for providing an external force to the manual manipulator, and a control section for controlling the vehicle-mounted electric device and the actuator are provided, wherein the control section computes the movable range of the vehicle-mounted electric device from its current position to an end of its possible motion according to changes in position signals supplied from the position sensor, and controls the output to the actuator according to the computed width of the movable range.

As this configuration enables the manual manipulator to give its operator a feel of resistance varying with the movable range of the vehicle-mounted electric device, the feel can be weakened when the movable range of the vehicle-mounted electric device from its current position to an end of its possible motion is wide or, conversely, it can be emphasized when the movable range is narrow. Accordingly, both high speed regulation and fine regulation of vehicle-mounted electric devices to be operated are made available at the same time, making it possible to correspondingly increase the operating convenience of the manual manipulator.

In order to solve the above-noted problems, sixthly, the invention uses a configuration in which the control section in the first through fifth means of solving the problems described above stores a plurality of tables listing correlations between changes in the position signals and the output of the actuators, and a switching means for the tables is provided on or in the vicinity of the manual manipulator.

As this configuration allows the operator to switch his or her feel of resistance of the manual manipulator as desired, the operating convenience of the manual manipulator can be improved.

### BRIEF DESCRIPTION OF THE DRAWINGS

Fig. 1 shows a perspective view of a state in which a vehicle-mounted input unit, which is a preferred embodiment of the present invention, is fitted to a dashboard.

Fig. 2 is a plan showing the interior of an automobile in which the vehicle-mounted input unit, which is the preferred embodiment of the invention, is fitted.

Fig. 3 shows a perspective view of a manual manipulator pertaining to the embodiment of the invention and a mechanism to which the manual manipulator is fitted.

Fig. 4 shows a section of an essential part of the manual manipulator pertaining to the embodiment of the invention and the mechanism to which the manual manipulator is fitted, as viewed from a side of the mechanism.

Fig. 5 shows a plan of the mechanism pertaining to the embodiment of the invention.

Fig. 6 shows a plan of the mechanism pertaining to the embodiment of the invention in its uncovered state.

Fig. 7 illustrates the available operating directions of the manual manipulator mechanism pertaining to the embodiment of the invention and the types of vehicle-mounted electric devices to be thereby selected in the respective directions.

Fig. 8 illustrates the available operating directions of the manual manipulator mechanism pertaining to the embodiment of the invention and the types of functions to be thereby selected in the respective directions.

Fig. 9 is a block diagram of a control system for an actuator pertaining to the embodiment of the invention.

Fig. 10 illustrates an example of data table to be stored in a memory provided in the control section pertaining to the embodiment of the invention.

Fig. 11 is a flowchart of the control procedure of the actuator pertaining to the embodiment of the invention.

Fig. 12 illustrates a menu of vehicle-mounted electric devices displayed on a display unit pertaining to the embodiment of the invention.

Fig. 13 illustrates an example of state of a vehicle-mounted electric device whose function is being regulated is displayed on the display unit pertaining to the embodiment of the invention.

Fig. 14 shows an interior view of an automobile in which a vehicle-mounted input unit is installed.

Fig. 15 shows a profile of a vehicle-mounted input unit proposed according to the prior art.

Fig. 16 shows a plan of a manual manipulator of the vehicle-mounted input unit shown in Fig. 15.

Fig. 17 shows a plan of a guide plate of the vehicle-mounted input unit shown in Fig. 15.

### DETAILED DESCRIPTION OF THE PREFERRED EMBODIMENT

A vehicle-mounted input unit, which is a first preferred embodiment of the present invention, will be described below with reference to accompanying drawings.

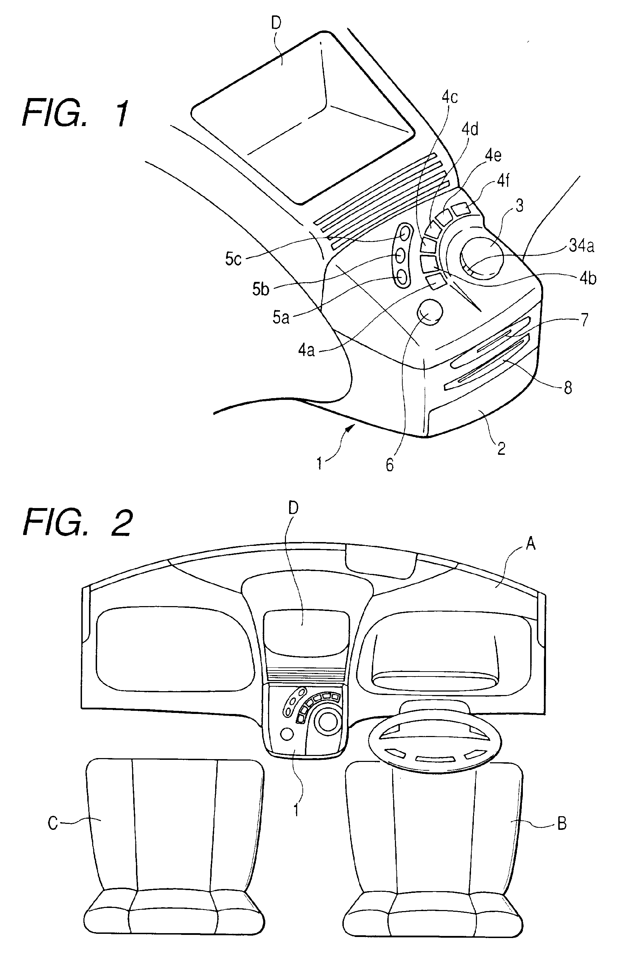

Fig. 1 shows a perspective view of a state in which the vehicle-mounted input unit, which is the preferred embodiment of the present invention, is fitted to a dashboard, and Fig. 2, a plan showing the interior of an automobile in which the vehicle-mounted input unit, which is the first preferred embodiment of the invention, is fitted.

As is evident from Fig. 1, in a vehicle-mounted input unit 1 pertaining to this embodiment of the invention, a case 2 is formed in a rectangular container shape of a required size, and on the upper face of the case 2 are disposed a manual manipulator 3, six push-button switches 4a, 4b, 4c, 4d, 4e and 4f arranged in an arc centering on the setting section of the manual manipulator 3, three push-button switch 5a, 5b and 5c arranged outside the positions of and cocentrically with the six push-button switches, and a volume control knob 6. On the front face of the case 2 are opened a card slot 7 and a disk slot 8. This vehicle-mounted input unit is fitted, as illustrated in Fig. 2, on the dashboard A of an automobile between its driver's seat B and front passenger seat C and, cooperating with a display unit D provided on the dashboard A and a control section (not shown) housed in the dashboard A, can perform its required functions.

These nine push-button switches 4a, 4b, 4c, 4d, 4e, 4f, 5a, 5b and 5c are individually connected to vehicle-mounted electric devices to be operated with the vehicle-mounted input unit 1, such as an air conditioner, a radio, a television, a CD player and a car navigation system. Whereas the connecting combination of a push-button switch and a vehicle-mounted electric device can be set as desired, in the vehicle-mounted input unit 1 of this example the push-button switch 4a is connected for menu selection, the push-button switch 4b for telephone, the push-button switch 4c for the air conditioner, the push-button switch 4d for the car navigation system, the push-button switch 4e for the radio, the push-button switch 4f for a card reader/writer or a disk drive unit, the push-button switch 5a for position control of the vehicle-mounted input unit 1, the push-button switch 5b for turning on/off a liquid crystal shutter provided all over the display unit D, and the push-button switch 5c for the television. By pressing a desired push-button switch knob, the vehicle-mounted electric device connected to the push-button switch can be selected. The surface of each push-button switch knob is marked with characters of a pictorial sign representing the vehicle-mounted electric device connected thereto (not shown).

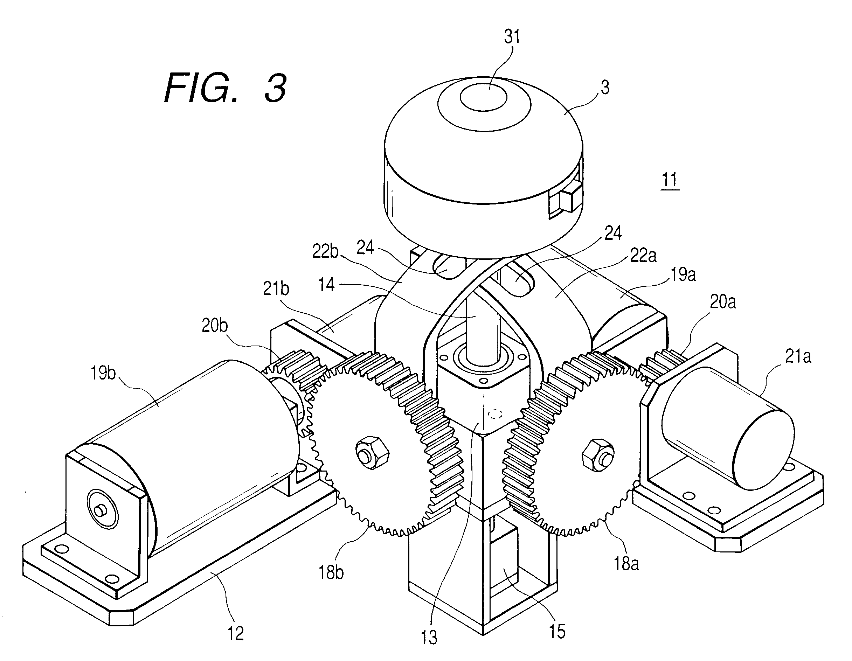

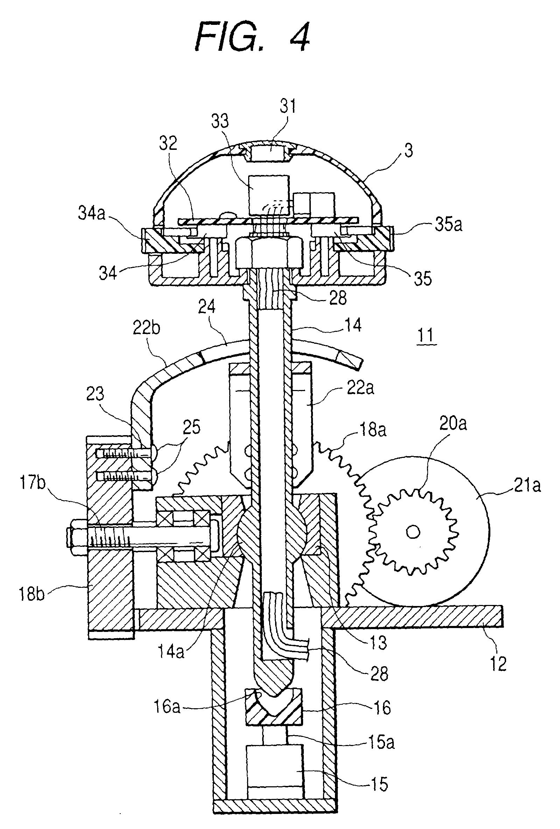

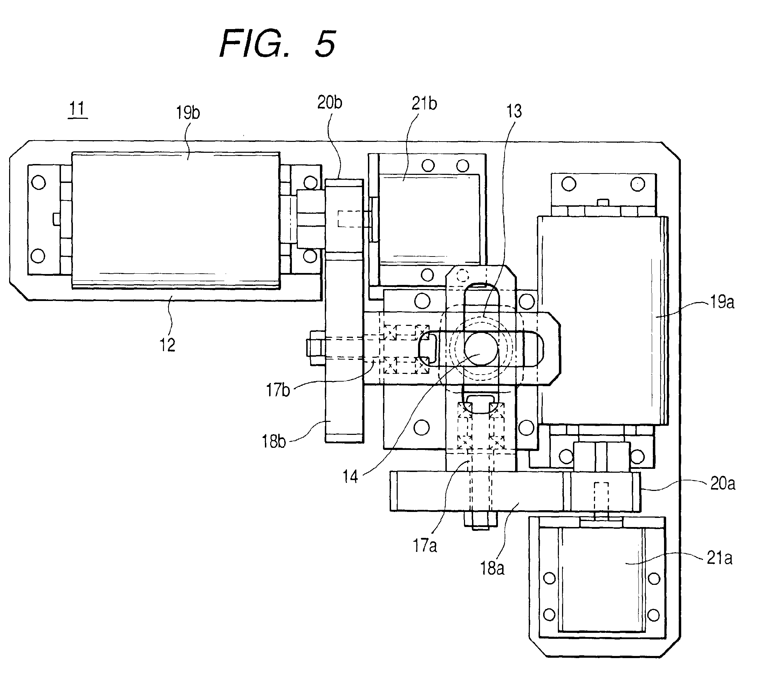

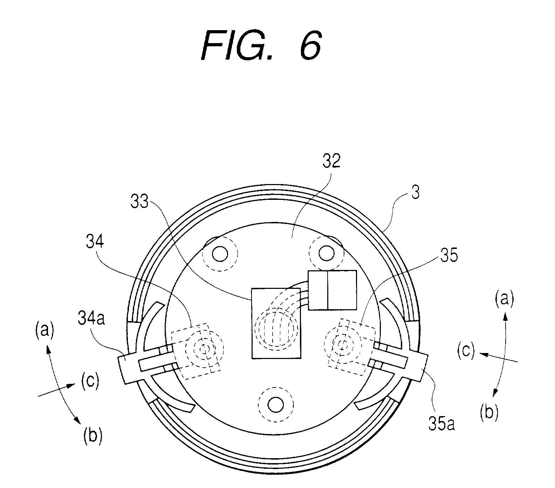

Fig. 3 shows a perspective view of the manual manipulator 3 and a mechanism 11 provided with the manual manipulator 3; Fig. 4, a section of an essential part of the manual manipulator 3 and the mechanism 11 provided with the manual manipulator 3 as viewed from a side of the mechanism; Fig. 5, a section of an essential part of the mechanism 11 as viewed in the planar direction; and Fig. 6, a plan of the mechanism 3 in its uncovered state.

As is evident from Fig. 3 through Fig. 5, the mechanism 11 consists of a base 12 fitted to the bottom face of the case 2; a spherical bearing 13 provided on the base 12; an operating shaft 14 on which a spherical part 14a arranged somewhat below the central part swingably pivots on the spherical bearing 13; a solenoid 15 arranged underneath the spherical bearing 13; a clamping member 16 of the operating shaft 14 fitted to the upper end of the drive shaft 15a of the solenoid 15; two rotational shafts 17a and 17b arranged on axes orthogonal to each other in a plane centering on the spherical bearing 13 and parallel to the base 12; two gears 18a and 18b stuck to the tips of the rotational shaft 17a and 17b, respectively: two actuators 19a and 19b arranged in parallel to the rotational shaft 17a and 17b, respectively; two pinions 20a and 20b stuck to the main shafts of the actuators 19a and 19b and engaged with the gear 18a and 18b, respectively; two position sensors 21a and 21b for detecting the directions and quantities of the rotations of the main shafts of the actuators 19a and 19b, respectively; and L-shaped members 22a and 22b for converting the swinging motions of the operating shaft 14 in the X and Y directions (see Fig. 5) into rotations in the X and Y directions and transmitting the rotations to the rotational shafts 17a and 17b, respectively. The manual manipulator 3 is fitted to the upper end of the operating shaft 14.

The lower end of the operating shaft 14 is formed in a tapering conical shape, and in the upper face of the clamping member 16 opposite it is formed a substantially conic dent 16a into which the tip of the operating shaft 14 can be inserted. Therefore, when the solenoid 15 is turned on to raise the clamping member 16, the tip of the operating shaft 14 is inserted into the dent 16a to clamp the operating shaft 14, and the swinging motion pivoting on the spherical part 14a is prohibited. On the other hand, when the solenoid 15 is turned off to lower the clamping member 16, the operating shaft 14 and the clamping member 16 are disengaged from each other, and the swinging motion of the operating shaft 14 centering on the spherical part 14a is permitted. The turning on/off of the solenoid 15 will be described in further detail later on.

The gears 18a and 18b and the pinions 20a and 20b may be ordinary toothed wheels satisfying applicable standards, but it is particularly preferable to use wheels embodying consideration against backlash. Possible contrivances against backlash include the arrangement of rubber or some other elastic covering of the tooth tips of the gears 18a and 18b and/or the pinions 20a and 20b and to let the gears 18a and 18b and the pinions 20a and 20b engage with each other via the elastic covering.

A tapped hole 23 is bored in one side each of the L-shaped members 22a and 22b, and a long operating shaft penetrating hole 24 is opened in the other side. These L-shaped members 22a and 22b, in a state in which the operating shaft 14 penetrates the operating shaft penetrating hole 24 as shown in Fig. 4, are fastened to sides of the gears 18a and 18b with bolts 25 each of which is inserted into the tapped hole 23 on one side. The width of each operating shaft penetrating hole 24 is made as nearly equal to the diameter of the operating shaft 14 within a range in which smooth sliding of the operating shaft 14 can be secured so that the backlash occurring against the operating shaft 14 can be minimized. The length of the operating shaft penetrating hole 24 is set either equal to or greater than the movable range of the operating shaft 14. Therefore, when the manual manipulator 3 is held and the operating shaft 14 is swung from the central position, the L-shaped members 22a and 22b swivel in rotational quantities corresponding to the components of the swing in the X and Y directions. Their rotations are transmitted to the respective position sensors 21a and 21b via the gears 18a and 18b and the pinions 20a and 20b, and the rotational direction and quantity of the operating shaft 14 are detected by a control section set in the dashboard A.

The manual manipulator 3, as shown in Fig. 3 and Fig. 4, is shaped like a dome having a transparent port 31 at the center of the top face. The inside, as illustrated in Fig. 4 and Fig. 6, is configured of a circuit board 32, a photo-interrupter 33 consisting of a combination of a light emitting element and a light receiving element mounted on the part of the circuit board 32 opposite the transparent port 31, and first and second switches 34 and 35 mounted on the periphery of the circuit board 32.

The photo-interrupter 33, intended for on-off control of the solenoid 15, emits a light of a specific wavelength, which may be an infrared ray for instance from the light emitting element (not shown) . When the light of the specific wavelength comes incident on the light receiving element (not shown), the photo-interrupter 33 effects control so as to turn on the solenoid 15 to lower the clamping member 16, disengages the clamping member 16 and the operating shaft 14 to enable the operating shaft 14 to swing. Power supply to the photo-interrupter 33 and signal transmission from the photo-interrupter 33 are accomplished by way of a cord 28 inserted through the operating shaft 14.

As the first and second switches 34 and 35, those that respectively have the functions of a rotation detecting operational switch and a press-in detecting operational switch, each having a knob position in the center when the switch is not operated, are used. First and second knobs 34a and 35a for operating these first and second switches 34 and 35, respectively, are set on the circumference of the manual manipulator 3 in bilateral symmetry as shown in Fig. 6, and can be pressed in the direction of arrow (c) besides being rotated along the circumference of the manual manipulator 3 from the central position in the direction of arrow (a) or (b).

These first and second switches 34 and 35 are set so that the operating directions of the first and second knobs 34a and 35a are the same for the functions switched thereby. Thus, whereas these first and second switches 34 and 35 are used for switching the function of the vehicle-mounted electric device selected by pressing one of the push-button switch 4a, 4b, 4c, 4d, 4e and 4f set on the upper face of the case 2, the first switch 34 and the second switch 35, when operated in the same direction, can switch the same function of the selected vehicle-mounted electric device. When, for instance, the air conditioner is selected by pressing the push-button switch 4c, either the first switch 34 or the second switch 35 serves to raise the set temperature of the air conditioner if the applicable one of the first and second knobs 34a and 35a is operated in the direction of arrow (a); to lower the set temperature of the air conditioner if the applicable one of the first and second knobs 34a and 35a is operated in the direction of arrow (b) ; or to effect on-off control on the air conditioner if the applicable one of the first and second knobs 34a and 35a is operated in the direction of arrow (c).

This assimilation of the operating directions of the first and second knobs 34a and 35a and the functions switched thereby enables the driver, irrespective of the side, right or left, on which the steering wheel of the car in which the vehicle-mounted input unit embodying the invention in this manner is installed, to find the knobs in the same positional relationship. As a result, because the driver can switch the same function by operating the knob in the same direction, he or she is unlikely to operate the input unit in a wrong way, resulting in increased versatility of the vehicle-mounted input unit since a vehicle-mounted input unit of the same configuration can be commonly used in right-wheeled and left-wheeled vehicles. Furthermore, if the use of the first the knob 34a and that of the second knob 35a are differentiated, the driver and the front passenger can operate switches provided on the manual manipulator 3 with the same feel, and this also helps reduce mishandling, resulting in enhanced operating convenience of the vehicle-mounted input unit.

The actuators 19a and 19b are intended to enable the operator of the manual manipulator 3 feel more or less resistance. This function is applicable, for instance, to control of the operating direction of the manual manipulator 3, the operating speed of the manual manipulator 3 according to the quantity of its operation, the stop point of the manual manipulator 3, the operating range of the manual manipulator 3 according to the movable range of the vehicle-mounted electric device, and the operating speed of the manual manipulator 3 according to the magnitude of the working force applied to the manual manipulator 3.

Thus the manual manipulator 3, by swinging in a specific direction, selects the vehicle-mounted electric device to be controlled or regulates the function of the selected vehicle-mounted electric device. Therefore, unless it can be accurately operated in a predetermined direction, it is unable to select a desired vehicle-mounted electric device or to regulate the function of the selected device accurately. Therefore, it is so disposed that, while the operation of the manual manipulator 3 in a predetermined direction requires no great working force, its operation in any other direction entails driving of the actuators 19a and 19b to load the operating shaft 14 with a torque in the direction reverse to the operating direction to cause the operator of the manual manipulator 3 to feel some resistance. This makes the operator aware by the feel of his or her hand that the manual manipulator 3 is being operated in an unintended direction, and thereby prevents a wrong vehicle-mounted electric device from being selected or a selected device from being erroneously regulated in function.

Or when the function of a vehicle-mounted electric device is to be regulated by operating the manual manipulator 3, for instance when the set temperature of the air conditioner is to be changed, if the manual manipulator 3 is operated in a small quantity, the change of the set temperature will take place slowly. However, if the operating quantity of the manual manipulator 3 is enlarged, the set temperature will be changed quickly. Accordingly, if the manual manipulator 3 gives no feel of resistance, the operator will tend to operate the manual manipulator 3 in a large quantity, and this makes it difficult to carry out a fine change of the set temperature accurately and quickly, resulting in operating inconvenience of the manual manipulator 3. Therefore, when the operating quantity of the manual manipulator 3 reaches a certain level, the actuators 19a and 19b are driven to load the operating shaft 14 with a torque in the direction reverse to the operating direction to cause the operator of the manual manipulator 3 to feel some resistance. This makes the operator aware by the feel of his or her hand that the operating quantity of the manual manipulator 3 is too great for fine regulation of the set temperature of the air conditioner, and he or she is enabled to carry out a fine change of the set temperature of the air conditioner accurately and quickly by reducing the operating of the manual manipulator 3. Incidentally, instead of causing its operator to feel some resistance when the operating quantity of the manual manipulator 3 has reached a certain level, it is also possible to cause the operator of the manual manipulator 3 to feel qualitatively different resistances in a successive way according to the operating quantity of the manual manipulator 3. Further, while the foregoing description referred to an example in which, the speed of regulating the set temperature of the air conditioner, for instance, becomes faster with an increase in the operating quantity of the manual manipulator 3, a similar method can be used to cause the operator of the manual manipulator 3 to feel resistance where the speed of regulation becomes faster with a rise in the operating speed of the manual manipulator 3.

If an operating limit of the manual manipulator 3 is regulated by mechanical means, for instance by having the edge of the spherical bearing 13 butt against the operating shaft 14, a large mechanical force will work on the butting joint between the spherical bearing 13 and the operating shaft 14 and cause them to suffer abrasion every time the manual manipulator 3 is operated. The resultant abrasion dust may intervene between the spherical bearing 13 and the spherical part 14a of the operating shaft 14 to cause the operating shaft 14 to require more force to work or, in the worst case, make it impossible for the operating shaft 14 to swing. In view of this problem, the actuators 19a and 19b are driven to load the operating shaft 14 with an impact torque, for example, in the direction reverse to the operating direction of the operating shaft 14 when the operating quantity of the manual manipulator 3 reaches a certain level. As this enables the operator to know by feel that the manual manipulator 3 has reached a limit of operation, he or she can stop the manual manipulator 3 from further action, and the edge of the spherical bearing 13 is prevented from butting against the operating shaft 14 and the aforementioned trouble which might result from the generation of abrasion dust can be avoided. Moreover, the torque generated by the actuators 19a and 19b can automatically return the manual manipulator 3 to its central position and thereby enhance the operating convenience of the manual manipulator 3.

Or when the position control of the vehicle-mounted input unit 1, for instance the height regulation of the steering wheel, is selected by pressing the push-button switch 5a, if the operator can operate the manual manipulator 3 without feeling any difference in resistance irrespective of the movable range from the current height of the wheel to a movable limit, he or she will be unable to sense the movable range of the vehicle-mounted electric device. Therefore, the operator cannot adapt his or her action to the situation whether the movable range to the end of the desired moving direction is wide and accordingly the operating quantity of the manual manipulator 3 should be increased to quickly achieve the target wheel height or, conversely, the movable range is narrow and accordingly the operating quantity of the manual manipulator 3 should be reduced to prevent the wheel from hitting against its movable limit. As a consequence, there is a high likelihood. of such trouble as taking an unduly long time to regulate the wheel height or letting the wheel strike against the movable limit at high speed to give rise to an impact. To avoid such trouble, if it is made possible to have a vehicle-mounted control section to compute the remaining movable range of the wheel and to have the actuators 19a and 19b apply a load on the manual manipulator 3 to let it pose resistance according to the width of the remaining movable range, the operator can sense the movable range of the wheel when he or she operates the manual manipulator 3 and manipulate it appropriately according to the sensed range, resulting in the elimination of the above-noted trouble.

The movable range may as well be computed by taking position signals supplied from the position sensors 21a and 21b into the control section to have the control section compute the difference between the minimum or maximum value of the position signals registered with the control section and the current values of the position signals.

Furthermore, the operator of the vehicle-mounted input unit 1 may be either powerful or relatively powerless physically. Therefore, if the force required to operate (the resistance from) the manual manipulator 3 is kept constant, a powerful operator may find the manual manipulator 3 too unresistant for accurate fine regulation of the vehicle-mounted input unit 1 or, conversely, a relatively powerless operator may find the manual manipulator 3 too resistant for broad regulation of the vehicle-mounted input unit 1. In view of this problem, by having the vehicle-mounted control section compute the working force applied to the manual manipulator 3 to cause the actuators 19a and 19b to make the manual manipulator 3 resist in a degree varying with the magnitude of the working force applied thereto, the resistance of the manual manipulator 3 can be optimized for each individual operator, who can be satisfied whether he or she is powerful or relatively powerless physically.

The working force applied to the manual manipulator 3 can be computed by taking position signals supplied from the position sensors 21a and 21b into the control section to have the control section to differentiate twice a change in the position signals to figure out the operating acceleration of the manual manipulator, and applying the second law of motion (F = m·a, wherein F is the working force applied to the manual manipulator, m is the mass of the manual manipulator and the operator's fingers, and a is the operating acceleration of the manual manipulator) to the acceleration thereby obtained.

Instead of computing the working force applied to the manual manipulator 3, it is also possible to compute the operating speed of the manual manipulator 3 and control outputs to the actuators 19a and 19b according to the computed level of the operating speed, or to compute the operating acceleration of the manual manipulator 3 and control outputs to the actuators 19a and 19b according to the computed level of the operating acceleration. The operating speed of the manual manipulator 3 can be computed by taking position signals supplied from the position sensors 21a and 21b into the control section to have the control section to differentiate once a change in the position signals with respect to time, and the operating acceleration of the manual operator 3 can be computed by taking position signals supplied from the position sensors 21a and 21b into the control section to have the control section to differentiate twice a change in the position signals. In this way, control is made possible to keep the operating speed or the operating acceleration of the manual manipulator 3 constant or make the speed or the acceleration variable according to the relative power of the operator. The operator is thereby enabled to sense adequately how he or she is operating the vehicle-mounted input unit, whose operating convenience is accordingly enhanced.

Moreover, it is possible not only to let the manual manipulator 3 pose resistance but also to add an external force in the direction of moving the manual manipulator 3. For instance, when the sound volume of the radio or the CD player is to be controlled as will be described in more detail afterwards, an external force can be applied to the manual manipulator 3 in such a way that moving the manual manipulator 3 in the direction of increasing the volume would meet more resistance and moving it in the direction of reducing the volume would give a sense of acceleration. In this way, as an abrupt increase in sound volume can be avoided and the volume can be reduced quickly, it is made possible to avoid obstruction to listening to the audio or conversation.

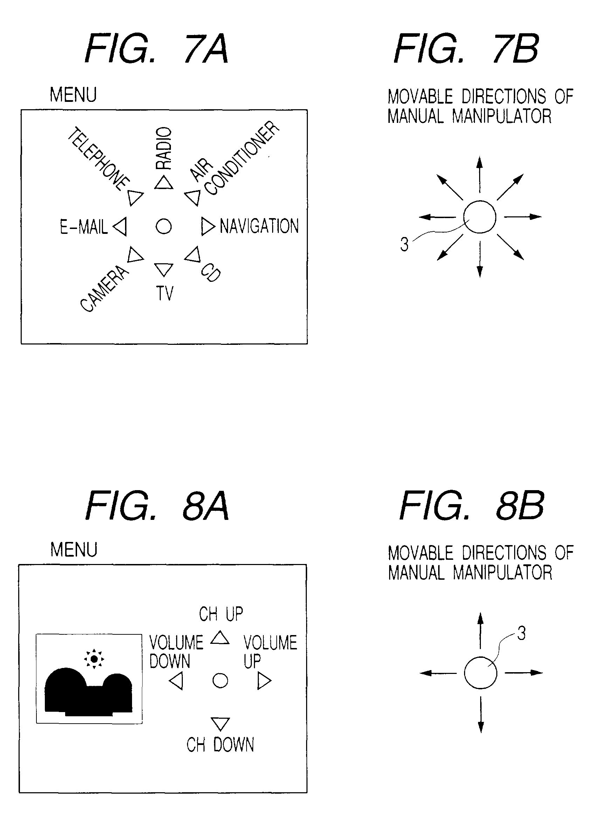

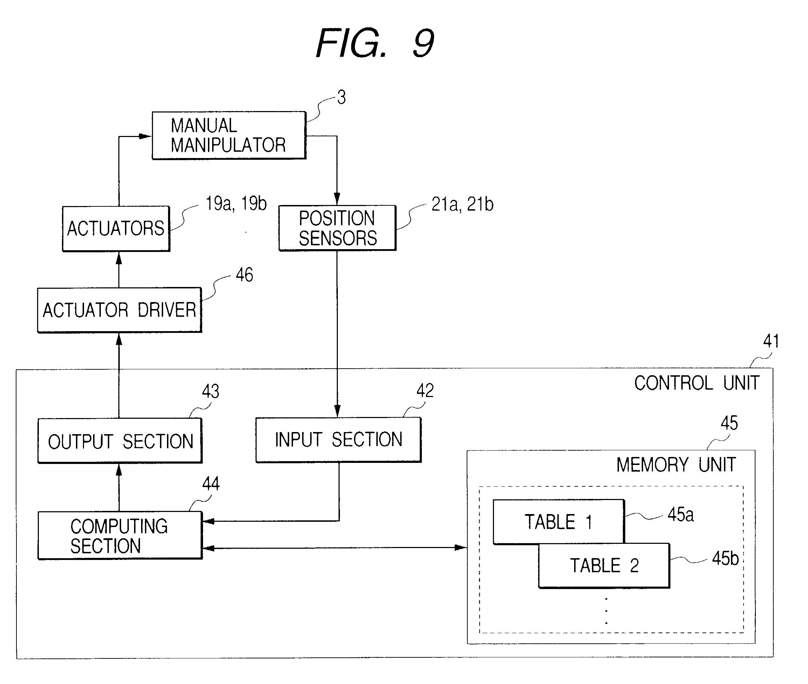

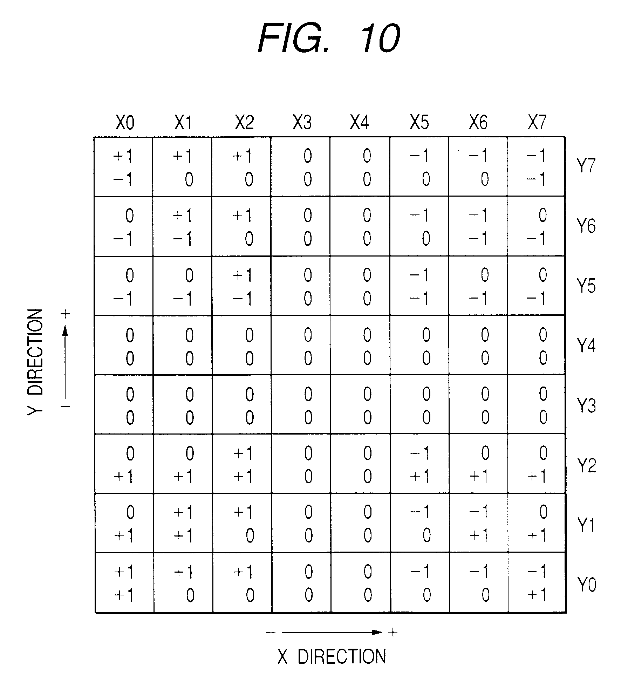

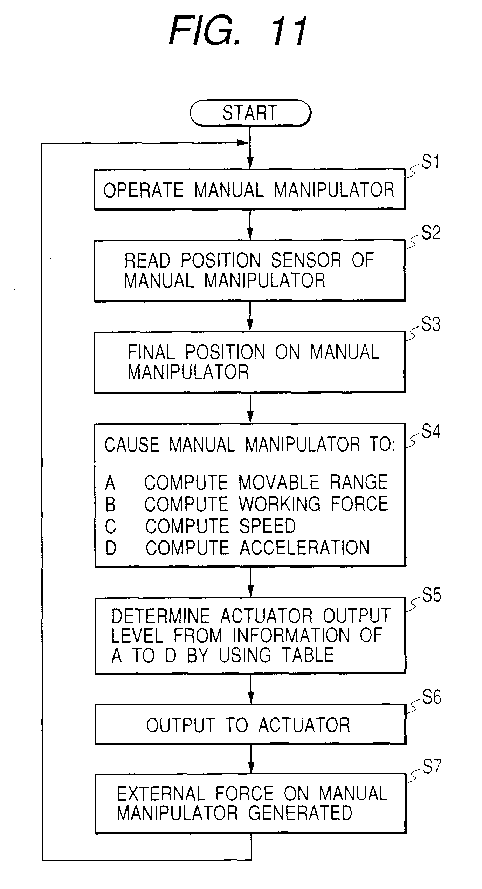

These actuators 19a and 19b are controlled in accordance with an instruction from the control section arranged in the dashboard A. The method of controlling the actuators 19a and 19b by the control section will be described below with reference to Fig. 7 through Fig. 11. Fig. 7 illustrates the available operating directions of the manual manipulator 3 and the types of vehicle-mounted electric devices to be thereby selected in the respective directions; Fig. 8, the available operating directions of the manual manipulator 3 and the types of functions to be thereby selected in the respective directions; Fig. 9 is a block diagram of a control system for the actuators 19a and 19b; Fig. 10 illustrates an example of data table to be stored in a memory provided in the control section; and Fig. 11 is a flowchart of the control procedure of the actuators 19a and 19b.

As shown in Figs. 7A and 7B, the vehicle-mounted input unit 1 in this example can select a radio, an air conditioner, a car navigation system, a CD player, a television, a watch camera, an e-mail or a telephone by operating the manual manipulator 3 from its central position straight forward, right forward, rightward, right backward, straight backward, leftward or left forward, respectively. The types of electric devices that can be selected with the push-button switches 4a, 4b, 4c, 4d, 4e, 4f, 5a, 5b and 5c provided on the vehicle-mounted input unit 1 and the types of electric devices that can be selected by operating the manual manipulator 3 may be either the same combinations of electric devices or different combinations of electric devices. In this embodiment of the invention, the types of electric devices that can be selected with the push-button switch 4a through 4f and 5a through 5c and the types of electric devices that can be selected by operating the manual manipulator 3 are different combinations of electric devices.

When the television is selected by operating the manual manipulator 3 straight backward from its central position, the channel selection can be moved upward by operating the manual manipulator 3 straight forward from its central position or downward by operating the same straight backward from its central position, and the sound volume can be increased by operating the same rightward from its central position or reduced by operating the same leftward from its central position as shown in Fig. 8A.

If the number of functions that are to be regulated by operating the manual manipulator 3 in this manner is not more than eight, the greatest number of directions in which the manual manipulator 3 can be moved, operation of the manual manipulator 3 in any other direction than those allocated for functional regulation (the directions shown in Fig. 8A) cannot regulate the function of the selected vehicle-mounted electric device. If there is any such insensitive zone in the operating range of the manual manipulator 3, the operator should be careful in operating the manual manipulator 3 so as to hit the right direction, resulting in operating inconvenience and an undesirable effect on the safe driving of the vehicle.

In view of this problem, the vehicle-mounted input unit 1 embodying the invention in this mode has a control system for the actuators 19a and 19b having a configuration illustrated in Fig. 9 and Fig. 10. Further by controlling the actuators 19a and 19b in the procedure shown in Fig. 11, the above-noted problem is solved.

Thus, as shown in Fig. 9, the control system for the actuators 19a and 19b has a configuration in which the position sensors 21a and 21b are connected to the input section 42 of the control section 41 provided in the dashboard A, and the actuators 19a and 19b are connected to the output section 43 of the control section 41 via an actuator driver 46. The control section 41 is provided with a computing section 44 and a memory unit 45 in addition to the input section 42 and the output section 43. The computing section 44, into which position signals taken into the input section 42 from the position sensors 21a and 21b and information read out of the memory unit 45 are entered, supplies control signals for the actuators 19a and 19b from the output section 43. In the memory unit 45 are stored tables 45a, 45b, 45c ... in which the operation areas of the manual manipulator 3 and the driving directions and the magnitudes of the driving forces of the actuators 19a and 19b are encoded.

Fig. 10 illustrates an example of data table to be stored in the memory unit 45, in which the movable range of the manual manipulator 3 is divided into eight equal parts each in the X direction and the Y direction. In each of the equally divided areas are indicated in an encoded form the drive or stop and the rotating direction of the actuators 19a and 19b when the manual manipulator 3 is operated. In each table, the sign and the numeral on the upper line denote the drive or stop and the rotating direction of the first actuator 19a and those on the lower line, the drive or stop and the rotating direction of the second actuator 19b. Sign "+" means the rotation of the actuator in the forward direction, and sign "-" means the rotation of the actuator in the reverse direction. Numeral "0" means the actuator 19a or 19b is not rotating, and numeral "1" means the actuator 19a or 19b is rotating. According to this table, when the manual manipulator 3 is operated in the area of (X3, Y0) through (X3, Y7), that of (X4, Y0) through (X4, Y7), that of (X0, Y3) through (X7, Y3) and that (X0, Y4) through (X7, Y4), neither of the actuators 19a or 19b is turned and no resistance accompanying the rotation of the actuator 19a or 19b is felt from the motion of the manual manipulator 3, and when the manual manipulator 3 is operated elsewhere, at least one of the actuators 19a and 19b is driven and the motion of the manual manipulator 3 gives a feel of resistance accompanying the driving of the actuators 19a and/or 19b.

Therefore, where the television is selected first by operating the manual manipulator 3, and the functional regulation of the television is possible only when the manual manipulator 3 is operated from its central position forward, backward, rightward or leftward as shown in Fig. 8A, if the rotational control over the actuators 19a and 19b is effected by using the table of Fig. 10 and the manual manipulator 3 is operated from its central position in some oblique direction other than the forward, backward, rightward and leftward directions, at least one of the actuators 19a and 19b rotates to provide the motion of the manual manipulator 3 with some resistance accompanying the drive of the actuators 19a and/or 19b, with the result that the operator can feel that he or she is operating the manual manipulator 3 in one of its insensitive zones. This enables the operator to operate the manual manipulator 3 in a direction in which the desired functional regulation can be accomplished, thereby enhancing the operating ease of the manual manipulator 3 without obstructing the safe driving of the automobile.

The drive control over the actuators 19a and 19b by the control section 41 takes place as shown in the flowchart of Fig. 11.

Thus, as the operator operates the manual manipulator 3 from its central position in some direction (step S1), the position sensors 21a and 21b rotate in the swinging direction of the manual manipulator 3 in a quantity proportional to the swinging quantity of the manual manipulator 3 via the L-shaped members 22a and 22b, the gear 18a and 18b and the pinions 20a and 20b to supply position signals. The computing section 44 provided in the control section 41 reads these position signals (step S2), and finalizes the operating position of the manual manipulator 3 (step S3). Then, the computing section 44 computes from the position signals the movable range of the manual manipulator 3, the working force applied to the manual manipulator 3, and the operating speed or the operating acceleration of the manual manipulator 3 according to the purpose of controlling the actuators 19a and 19b (step S4). After that, the computing section 44 determines the output values of the actuators 19a and 19b from the data computed at step S4 and the data of tables 45a, 45b ... read out of the memory unit 45 (step S5), and supplies control signals to the actuators 19a and 19b via the actuator driver 46 (step S6). Responding to these control signals, the actuators 19a and 19b are driven to provide resistance to the motion of the manual manipulator 3 (step S7). Sensing the resistance of the manual manipulator 3, the operator changes the operating position of the manual manipulator 3. Thereafter, until the required operation is completed, the actions of step S1 through step S7 are repeated. Further, a control signal for a vehicle-mounted electric device corresponding to the operating direction and quantity of the manual manipulator 3 is supplied via the output section 43 to control the vehicle-mounted electric device (not shown).

To add, these means and method of controlling the actuators can be applied not only to the regulation of the operating direction of the manual manipulator 3 but also to providing a feel of resistance corresponding to the operating quantity of the manual manipulator 3, at an operating limit of the manual manipulator 3, according to the width of the movable range of a vehicle-mounted electric device and the magnitude of the working force applied to the manual manipulator 3. In these case, unlike in the instance shown in Fig. 10, tables in which the output values of the actuators 19a and 19b corresponding to the operating quantity of the manual manipulator 3 are stored in the control section 41 regarding the movable directions of the manual manipulator 3.

It is further possible to store in advance in the control section 41 a plurality of tables of the output values of the actuators 19a and 19b differing with the operating quantity of the manual manipulator 3 regarding the particulars of the operation of each vehicle-mounted electric device (see Fig. 10) and to change as appropriate the table for use in the control of the actuators 19a and 19b according to the preference of the operator. For table changing, a switch for that purpose (not shown) can be provided on or in the vicinity of the manual manipulator 3 so that the operator can operate the switch as appropriate. Alternatively, it is also conceivable to enable the control section 41 to recognize the ID sign of each individual operator and automatically switch the table accordingly. As this would make it possible to change the resistance from the manual manipulator 3 according to the preference of the operator, the operating convenience of the manual manipulator 3 can be further improved.

The vehicle-mounted input unit 1 embodying the present invention as described above can be fitted movably forward and backward and inclinable with respect to the dashboard A of an automobile.

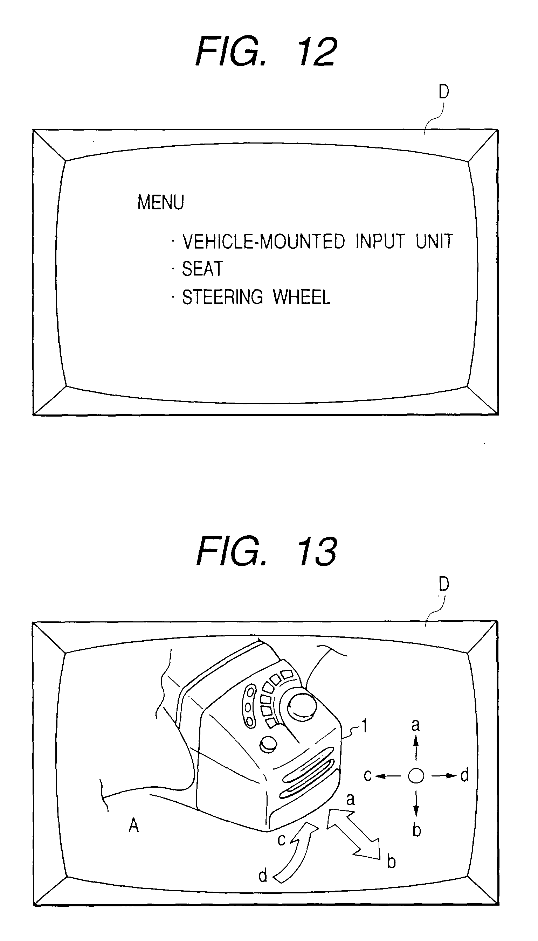

The position control of this vehicle-mounted input unit 1 can also be accomplished by operating the manual manipulator 3 and the push-button switches 4a through 4f and 5a through 5c mounted on the vehicle-mounted input unit 1. If, for instance, the push-button switch 4a is pressed, a menu as illustrated in Fig. 12 will emerge on the display unit D. As the "vehicle-mounted input unit" is selected from the menu by operating the manual manipulator 3, an image of the vehicle-mounted input unit 1 as shown in Fig. 13 will appear on the display unit D. If the manual manipulator 3 is operated in the "forward a" direction in this state, the vehicle-mounted input unit 1 will move forward, and if the manual manipulator 3 is operated in the "backward b" direction in this state, the vehicle-mounted input unit 1 will move backward. If the manual manipulator 3 is operated in the "upward d" direction in this state, the tip of the vehicle-mounted input unit 1 will turn upward and if the manual manipulator 3 is operated in the "downward" direction in this state, the tip of the vehicle-mounted input unit 1 will turn downward. When the "seat" is selected from the menu screen, the comfort of the driver's or the front passenger's seat can be regulated in a similar procedure and if the "steering wheel" is selected from the menu screen, the tilt and the telescopic adjustment of the steering wheel can be made in a similar procedure to regulate the height of the wheel.

In changing the position of the vehicle-mounted input unit 1, seat or steering wheel by operating the manual manipulator 3 as described above, it is particularly preferable to associate the movable range of each of these units with the resistance it poses to the manual manipulator 3, and to set the pertinent table in such a manner that, for instance, the resistance working on the manual manipulator 3 gradually increases as an end of the movable range is approached and an impactive resistance is felt on the manual manipulator 3 when the end is finally reached. This would add to the operating convenience because the operator could perceive the point in the movable range to which he or she has regulated the pertinent unit.

As described above, the vehicle-mounted input unit 1, which is the first preferred embodiment of the invention, permits selection of a desired vehicle-mounted electric device, whose function is to be regulated, by either pressing the pertinent one of the push-button switches 4a through 4f and 5a through 5c provided on the upper face of the case 2 or operating the manual manipulator 3. After the desired vehicle-mounted electric device is selected, its function can be regulated by either operating the manual manipulator 3 in a predetermined direction or operating the first and second switches 34 and 35 provided in the manual manipulator 3. The sound volume of the radio, television or CD player can also be controlled by turning the volume control knob 6. The menu of vehicle-mounted electric devices selectable by this vehicle-mounted input unit 1, the menu of regulable functions of each vehicle-mounted electric device, the operating direction of the manual manipulator 3 and other relevant information are successively displayed on the display unit D. When the manual manipulator 3 is not being operated, the operating shaft 14 is clamped by the clamping member 16 to prevent the manual manipulator 3 from generating undesirable vibration or noise which would otherwise accompany the vibration of the vehicle. As fingers of a hand are held out over the manual manipulator 3, light of a specific wavelength from the light emitting element comes incident on the light receiving element of the photo-interrupter 33 to turn on the solenoid 15, and the clamping member 16 and the operating shaft 14 is thereby disengaged from each other to automatically make the manual manipulator 3 operable.

Although a gear mechanism is used in the above-described first embodiment as the power transmission mechanism for transmitting the swinging of the operating shaft 14 to the position sensors 21a and 21b, the essence of the invention is not limited to this configuration, and any appropriate known power transmission mechanism, such as friction gearing or a belt mechanism, can be used instead.

Also in the above-described first embodiment, the position sensors 21a and 21b are used as sensors for detecting the direction and quantity of the swinging of the operating shaft 14, but the essence of the invention is not limited to this configuration. Any other appropriate known position sensors can be used instead.

Also in the above-described first embodiment, the solenoid 15 is used as the drive means for the clamping member 16, but the essence of the invention is not limited to this configuration. Any other appropriate means, such as an electromagnetic, hydraulic or pneumatic actuator, can be used instead.

Further, in the above-described first embodiment, although the two actuators 19a and 19b and the two position sensors 21a and 21b are used to make the manual manipulator 3 operable in multiple directions, it is also possible to use only one actuator and one position sensor to make the manual manipulator 3 operable in one specific direction alone.

A configuration according to one aspect of the invention is provided with a manual manipulator, position sensors for supplying position signals corresponding to the direction and quantity in which the manual manipulator is driven, actuators for providing an external force to the manual manipulator, and a control section for controlling the actuators, wherein the control section computes the movable range of the manual manipulator from its current position to an end of its possible motion according to changes in position signals supplied from the position sensors, and controls the output to the actuators according to the computed width of the movable range. This configuration enables the manual manipulator to give its operator a feel of resistance varying with the movable range of the manipulator, the feel can be weakened when the movable range of the manual manipulator from its current position to an end of its possible motion is wide or, conversely, it can be emphasized when the movable range is narrow. Accordingly, both high speed regulation and fine regulation of vehicle-mounted electric devices to be operated by the manual manipulator are made available at the same time, making it possible to correspondingly increase the operating convenience of the manual manipulator.

A configuration according to another aspect of the invention is provided with a manual manipulator, position sensors for supplying position signals corresponding to the direction and quantity in which the manual manipulator is operated, actuators for providing an external force to the manual manipulator, and a control section for controlling the actuators, wherein the control section computes the magnitude of the working force applied to the manual manipulator according to changes in position signals supplied from the position sensors, and controls the output to the actuators according to the computed working force. This configuration enables the manual manipulator to give its operator a feel of resistance varying with the working force applied thereto, when for instance a powerful operator forcefully operates the manual manipulator, the feel can be strengthened or, conversely, when a relatively powerless operator operates the manual manipulator with a relatively small force, it can be weakened to enable the operator, irrespective of his or her relative power, to feel satisfactory operating convenience.

A configuration according to another aspect of the invention is provided with a manual manipulator, position sensors for supplying position signals corresponding to the direction and quantity in which the manual manipulator is driven, actuators for providing an external force to the manual manipulator, and a control section for controlling the actuators, wherein the control section computes the operating speed of the manual manipulator according to changes in position signals supplied from the position sensors, and controls the output to the actuators according to the computed level of the operating speed. This configuration enables the manual manipulator to give its operator a feel of resistance varying with the operating speed of the manual manipulator, it can keep the operating speed of the manual manipulator either constant or variable from one operator to another and thereby enable the operator to feel that he or she is operating the manipulator appropriately, resulting in improved operating convenience of the vehicle-mounted input unit.

A configuration according to another aspect of the invention is provided with a manual manipulator, position sensors for supplying position signals corresponding to the direction and quantity in which the manual manipulator is driven, actuators for providing an external force to the manual manipulator, and a control section for controlling the actuators, wherein the control section computes the operating acceleration of the manual manipulator according to changes in position signals supplied from the position sensors, and controls the output to the actuators according to the computed level of the operating acceleration. This configuration enables the manual manipulator to give its operator a feel of resistance varying with the operating acceleration of the manual manipulator, it can keep the operating acceleration of the manual manipulator either constant or variable from one operator to another and thereby enable the operator to feel that he or she is operating the manipulator appropriately, resulting in improved operating convenience of the vehicle-mounted input unit.

A configuration according to another aspect of the invention is provided with a manual manipulator, vehicle-mounted electric devices operated by the manual manipulator, position sensors for supplying position signals corresponding to the direction and quantity in which a pertinent vehicle-mounted electric device is driven, actuators for providing an external force to the manual manipulator, and a control section for controlling the vehicle-mounted electric devices and the actuators, wherein the control section computes the movable range of the vehicle-mounted electric device from its current position to an end of its possible motion according to changes in position signals supplied from the position sensors, and controls the output to the actuators according to the computed width of the movable range. This configuration enables the manual manipulator to give its operator a feel of resistance varying with the movable range of the vehicle-mounted electric device, the feel can be weakened when the movable range of the vehicle-mounted electric device from its current position to an end its possible motion is wide or, conversely, it can be emphasized when the movable range is narrow. Accordingly, both high speed regulation and fine regulation of vehicle-mounted electric devices to be operated are made available at the same time, making it possible to correspondingly increase the operating convenience of the manual manipulator.

## Claims

1. A vehicle-mounted input unit provided with a manual manipulator, at least one position sensor for supplying position signals corresponding to the direction and quantity in which the manual manipulator is driven, at least one actuator for providing an external force to the manual manipulator, and a control section for controlling the actuators, wherein the control section computes the movable range of the manual manipulator from its current position to an end of its possible motion according to changes in position signals supplied from the position sensors, and controls the output to the actuators according to the computed width of the movable range.

2. A vehicle-mounted input unit provided with a manual manipulator, at least one position sensor for supplying position signals corresponding to the direction and quantity in which the manual manipulator is operated, at least one actuator for providing an external force to the manual manipulator, and a control section for controlling the actuator wherein the control section computes the magnitude of the working force applied to the manual manipulator according to changes in position signals supplied from the position sensor, and controls the output to the actuator according to the computed working force.

3. A vehicle-mounted input unit provided with a manual manipulator, at least one position sensor for supplying position signals corresponding to the direction and quantity in which the manual manipulator is driven, at least one actuator for providing an external force to the manual manipulator, and a control section for controlling the actuator, wherein the control section computes the operating speed of the manual manipulator according to changes in position signals supplied from the position sensor, and controls the output to the actuator according to the computed level of the operating speed.

4. A vehicle-mounted input unit provided with a manual manipulator, at least one position sensor for supplying position signals corresponding to the direction and quantity in which the manual manipulator is driven, at least one actuator for providing an external force to the manual manipulator, and a control section for controlling the actuator, wherein the control section computes the operating acceleration of the manual manipulator according to changes in position signals supplied from the position sensor, and controls the output to the actuator according to the computed level of the operating acceleration.

5. A vehicle-mounted input unit provided with a manual manipulator, at least one vehicle-mounted electric device operated by the manual manipulator, at least one position sensor for supplying position signals corresponding to the direction and quantity in which the vehicle-mounted electric device is driven, at least one actuator for providing an external force to the manual manipulator, and a control section for controlling the vehicle-mounted electric device and the actuator, wherein the control section computes the movable range of the vehicle-mounted electric device from its current position to an end of its possible motion according to changes in position signals supplied from the position sensor, and controls the output to the actuator according to the computed width of the movable range.

6. The vehicle-mounted input unit according to any of claims 1 to 5, wherein a plurality of tables listing correlations between changes in the position signals and the output of the actuators are stored in the control section, and a switching means for the tables is provided on or in the vicinity of the manual manipulator.
